# EUROPÄISCHE PATENTSCHRIFT

(11) **EP 3 463 696 B1**
(45) Veröffentlichungstag und Bekanntmachung des Hinweises auf die Patenterteilung: **07.07.2021**
(21) Anmeldenummer: 17726908.1
(22) Anmeldetag: 24.05.2017
(51) Int. Cl.: B07C 5/342

(54) **VORRICHTUNG UND VERFAHREN ZUM UNTERSUCHEN VON SCHÜTTGUT**
DEVICE FOR METHOD FOR INSPECTING BULK MATERIAL
DISPOSITIF ET PROCÉDÉ D'INSPECTION DU MATÉRIAU EN VRAC

(30) Priorität: 26.05.2016 DE 102016109752
(43) Veröffentlichungstag der Anmeldung: 10.04.2019
(73) Patentinhaber: SIKORA AG, 28307 Bremen (DE)
(72) Erfinder: BREMER, Klaus, 28879 Grasberg (DE)
(74) Vertreter: Hauck Patentanwaltspartnerschaft mbB
(86) Internationale Anmeldenummer: PCT/EP2017/062615
(87) Internationale Veröffentlichungsnummer: WO 2017/202954

(56) Entgegenhaltungen:
- EP-A2- 0 631 828
- DE-A1- 2 722 368
- DE-A1-102012 001 868
- GB-A- 2 165 644

## Beschreibung

Die Erfindung betrifft eine Vorrichtung zum Untersuchen von Schüttgut, insbesondere von Pellets, auf Verunreinigungen, umfassend einen Schüttguteintritt, durch den Schüttgut der Vorrichtung in einem im Wesentlichen planen Schüttgutstrom zugeführt wird. Die Erfindung betrifft außerdem ein Verfahren zum Betreiben einer solchen Vorrichtung.

Es ist bekannt, mit Hilfe optischer Messverfahren Verunreinigungen von Schüttgut, beispielsweise von Kunststoffpellets, zu detektieren. Über eine geeignete Zuführung, beispielsweise eine Vibrationsförderrinne, werden die zu untersuchenden Pellets einer optischen Detektoreinrichtung zugeführt, die die Pellets im freien Fall untersucht. Eine solche Vorrichtung ist beispielsweise bekannt aus WO 2015/051927 A1. Bei den Verunreinigungen kann es sich beispielsweise um metallische Verunreinigungen in Kunststoffpellets handeln, die einem Extruder als Ausgangsmaterial für eine Kunststoffisolierung elektrischer Leiter zugeführt werden sollen.

Abhängig von der Art des zu untersuchenden Schüttguts führt die bekannte Vorgehensweise zu mehr oder weniger guter Detektion von Verunreinigungen. Problematisch ist die bekannte Vorgehensweise insbesondere bei transparenten Pellets. Während transparente Pellets mit rauer Oberfläche aufgrund einer weitgehend diffusen Reflektion des von einer optischen Messeinrichtung auf die Pellets gerichteten Lichts noch vergleichsweise zuverlässig zu untersuchen sind, sind insbesondere transparente Pellets mit glatter und spiegelnd reflektierender Oberfläche problematisch. Hier kommt es zu Störungen aufgrund von Reflektionen sowie Schattenbildung. Weiter erschwert wird die Detektion aufgrund der Tatsache, dass sich die Pellets im Fall befinden und ihre Ausrichtung daher zufällig verteilt ist. GB 2 165 644 A beschreibt eine Sortiervorrichtung mit zwei aufeinanderfolgend im Schüttgutstrom angeordneten Hohlkugeln, wobei von einer Lichtquelle ausgesandte Strahlung jeweils durch einen Filter in die Hohlkugel hinein läuft und über einen Reflektor auf eine Innenseite der Kugel gelenkt wird.

DE 27 22 368 A1 betrifft eine Sortiervorrichtung zur optischen Untersuchung von Bohnen, die längs durch eine zylinderförmige Gehäuseöffnung eines Gehäuses hindurchfallen und eine Detektorvorrichtung passieren. Zu der Detektorvorrichtung gehören vier Lampen, welche Licht durch Kollimatorlinsen auf die Bohnen richten, wobei von den Bohnen reflektiertes Licht wiederum auf Fotodioden trifft.

EP 0 631 828 A2 betrifft einen Farbsortierer für Hülsenfrüchte mit zwei Detektoren, wobei die Hülsenfrüchte entlang einer Längsachse einer sich durch die Detektoren erstreckenden Öffnung fallen.

Ausgehend von dem erläuterten Stand der Technik liegt der Erfindung daher die Aufgabe zugrunde, eine Vorrichtung und ein Verfahren der eingangs genannten Art bereitzustellen, mit denen für jegliche Art von Schüttgut Verunreinigungen in einfacher und baulich kompakter Weise zuverlässig detektiert werden können.

Die Erfindung löst die Aufgabe durch die unabhängigen Ansprüche 1 und 16. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch, dass die Vorrichtung zwei einander röhrenförmig gegenüberliegende Tunnelabschnitte umfasst, die so angeordnet sind, dass der Schüttgutstrom zwischen den Tunnelabschnitten hindurch fällt, wobei mindestens einer der Tunnelabschnitte Leuchtmittel zum indirekten Beleuchten des Schüttgutstroms aufweist, wobei die indirekte Beleuchtung derart ist, dass keine optische Strahlung direkt von den Leuchtmitteln zu dem Schüttgut gelangt, und dass keine optische Strahlung direkt von den Leuchtmitteln zu dem optischen Detektor gelangt, wobei mindestens ein optischer Detektor vorgesehen ist, der durch mindestens einen der Tunnelabschnitte hindurch auf den Schüttgutstrom gerichtet ist, und wobei eine Auswerteeinrichtung vorgesehen ist, die anhand der Messdaten des mindestens einen optischen Detektors Verunreinigungen des untersuchten Schüttguts feststellt.

Bei dem erfindungsgemäß untersuchten Schüttgut kann es sich um Pellets handeln, beispielsweise Kunststoffpellets. Insbesondere kann es sich um für die von den Leuchtmitteln ausgesandte und von dem mindestens einen optischen Detektor empfangene optische Strahlung und/oder für das menschliche Auge transparentes Schüttgut, insbesondere transparente Pellets, weiter insbesondere transparente Pellets mit glatter und spiegelnd reflektierender Oberfläche handeln.

Die erfindungsgemäße Vorrichtung umfasst einen Schüttguteintritt, über den das zu untersuchende Schüttgut zugeführt wird. Dieser Schüttguteintritt kann im einfachsten Fall durch den Eintritt in die Tunnelabschnitte gebildet sein. Das über den Schüttguteintritt zugeführte Schüttgut fällt schwerkraftbedingt im freien oder seitlich geführten Fall durch die Vorrichtung hindurch. Dem Schüttguteintritt vorgeordnet kann ein das Schüttgut dem Schüttguteintritt zuführendes Förderband oder eine Vibrationsrinne sein, wie dies grundsätzlich aus WO 2015/051927 A1 bekannt ist. Durch solche Zuführungen kann ein im Wesentlichen in einer Ebene liegender Schüttgutstrom besonders zuverlässig erzeugt werden. Der Schüttgutstrom fällt erfindungsgemäß vorhangartig durch einen von zwei Tunnelabschnitten gebildeten röhrenförmigen Abschnitt. Die Fallrichtung des Schüttgutstroms liegt erfindungsgemäß senkrecht zur Längsachse des von den Tunnelabschnitten gebildeten röhrenförmigen Abschnitts. Nach Durchlaufen der Vorrichtung verlässt der im wesentlichen plane Schüttgutstrom die Vorrichtung durch einen Schüttgutaustritt. Der Schüttguteintritt und der Schüttgutaustritt des im Wesentlichen planen Schüttgutstroms bilden eine (vertikale) Ebene, die sich mit der Symmetrieebene der durch die Tunnelabschnitte gebildeten Doppeltunnelanordnung deckt.

Erfindungsgemäß erfolgt in dem durch die Tunnelabschnitte gebildeten röhrenförmigen Abschnitt eine insbesondere ausschließlich indirekte Beleuchtung des fallenden Schüttguts. Zu diesem Zweck weist mindestens einer der Tunnelabschnitte geeignete Leuchtmittel auf. Die indirekte Beleuchtung des Schüttgutstroms durch die Leuchtmittel ist dabei derart, dass keine optische Strahlung direkt von den Leuchtmitteln zu dem Schüttgut gelangt, und dass keine optische Strahlung direkt von den Leuchtmitteln zu dem optischen Detektor gelangt. Weitere Leuchtmittel zur direkten Beleuchtung des Schüttgutstroms sind insbesondere nicht vorgesehen. Mindestens ein optischer Detektor erfasst den indirekt beleuchteten Schüttgutstrom.

Der mindestens eine optische Detektor kann zum Beispiel in einer Richtung quer zur Fallrichtung des Schüttguts auf den Schüttgutstrom gerichtet sein. Der optische Detektor, bei dem es sich beispielsweise um eine Kamera handeln kann, ist für den von den Leuchtmitteln des mindestens einen Tunnelabschnitts ausgesandten Wellenlängenbereich empfindlich. Das von den Leuchtmitteln ausgesandte Licht kann im sichtbaren Wellenlängenbereich liegen oder im nicht-sichtbaren Wellenlängenbereich, zum Beispiel im Infrarot- oder UV-Bereich. In besonders praxisgemäßer Weise kann es sich bei den Leuchtmitteln um Leuchtdioden handeln. Als optische Detektoren sind beispielsweise Zeilenkameras denkbar ebenso wie zweidimensional auflösende Kameras. Der mindestens eine optische Detektor kann dabei auch schnell wiederholende Aufnahmen anfertigen. Auch ist es möglich, als optische Detektoren im TDI (Time Delay Integration)-Modus betriebene Kameras zu verwenden. Die Messdaten des mindestens einen optischen Detektors werden einer Auswerteeinrichtung übermittelt, die anhand der Messdaten auf Verunreinigungen des Schüttguts schließt. In diesem Zusammenhang sollen auch farbliche Abweichungen des Schüttguts von einer vorgegebenen Farbe als Verunreinigungen angesehen werden. Die Auswerteeinrichtung kann zum Beispiel aus einem Auftreten detektierter Strahlung bestimmter Helligkeit auf Verunreinigungen schließen. Eine solche Auswertung ist grundsätzlich bekannt, beispielsweise aus der WO 2015/051927 A1.

Der Erfindung liegt die Erkenntnis zugrunde, dass eine möglichst gleichmäßige Beleuchtung des Schüttguts aus möglichst allen Raumrichtungen die Detektierbarkeit von Verunreinigungen des im Fallen befindlichen Schüttguts erheblich verbessert, insbesondere bei transparentem Schüttgut mit glatter, reflektierender Oberfläche. Um bei einem im Fall befindlichen Schüttgutstrom eine möglichst gleichmäßige Beleuchtung zu erreichen, ist erfindungsgemäß der erläuterte Doppeltunnel vorgesehen, durch den der Schüttgutstrom hindurchfällt. Dabei nutzt die Erfindung grundsätzlich die Funktionsweise einer sogenannten Ulbricht-Kugel, also einer innen diffus reflektierenden Hohlkugel mit einer im Zentrum der Kugel angeordneten Lichtquelle. Naturgemäß stellt die Ulbricht-Kugel eine Idealisierung dar, die in der Praxis nicht auf einen im Fall befindlichen Schüttgutstrom anwendbar ist. Zum einen würde ein durch eine Ulbricht-Kugel verlaufender Schüttgutstrom die ideale Kugelbeleuchtung stören. Zum anderen würden Abschattungen durch benachbarte Anteile des Schüttgutstroms entstehen, die wiederum zu Fehldetektionen führen würden. Darüber hinaus ist der Einsatz einer solchen Ulbricht-Kugel bei dem für einen hohen Schüttgutdurchsatz erwünschten breiten Schüttgutstrom auch aus Gründen der baulichen Abmessungen nicht praktikabel. Auch bereits vorgeschlagen wurden domartige (Auflicht-)Beleuchtungsanordnungen, die eine auf einer Unterlage angeordnete Probe überdecken und beleuchten. Auch hier ist eine Übertragung auf einen im Fall befindlichen Schüttgutstrom nicht möglich. Außerdem erzeugt eine solche Beleuchtungsanordnung Abschattungen, die eine Fehldetektion hervorrufen würden. Unterlagen für ortsfest angeordnetes Schüttgut, selbst transparente Unterlagen, würden aufgrund weiterer Reflektionen das Detektionsergebnis stören. Dies betrifft insbesondere Reflektionen im Bereich einer Berührung zwischen dem Schüttgut und einer Unterlage. Es würden Störstellen entstehen, die Verunreinigungen vortäuschen, die tatsächlich nicht vorhanden sind.

Durch die erfindungsgemäße Doppeltunnelanordnung mit den beiden einander gegenüberliegenden, einen beispielsweise zylindrischen Röhrenabschnitt bildenden tunnelförmigen Abschnitten, die insbesondere seitlich über die Breite des Schüttgutstroms überstehen, wird der plane Schüttgutstrom optimal allseitig beleuchtet und insbesondere etwa im Zentrum der Doppeltunnelanordnung durch den optischen Detektor untersucht. Durch diese erfindungsgemäße Lehre können Verunreinigungen auch bei schwierig zu untersuchendem Schüttgut sicher detektiert werden. Indem der Schüttgutstrom durch die Tunnelabschnitte hindurchfällt, werden Störungen durch etwaige, das zu beleuchtende Schüttgut haltende Unterlagen sicher vermieden. Das Schüttgut kann wie bereits erläutert frei oder geführt durch die Vorrichtung fallen. Unter einem geführten Fall wird in diesem Zusammenhang ein quasi freier Fall verstanden, bei dem die Objekte beispielsweise angrenzende Wände kurzzeitig streifend berühren können, wodurch sie einerseits in einem relativ schmalen Bereich geführt werden, andererseits aber im Wesentlichen dieselbe Geschwindigkeit wie im freien Fall aufnehmen.

Die einander gegenüberliegenden Tunnelabschnitte können spiegelsymmetrisch angeordnet sein. Sie können identisch ausgebildet sein. Es ist aber auch möglich, dass die einander gegenüberliegenden Tunnelabschnitte unterschiedlich ausgebildet sind. Die Tunnelabschnitte können im Schnitt jeweils halbkreisförmig ausgebildet sein, jeweils also einen Halb(kreis-)zylinder bilden. Sie können aber auch eine von einer Halbkreisform abweichende Querschnittsform besitzen. Beispielsweise können die Tunnelabschnitte sich verändernde Radien aufweisen, ein oder mehrere plane Teilstücke besitzen oder zusätzliche Kanten umfassen.

Die Tunnelabschnitte können voneinander beabstandet sein, wobei der Schüttgutstrom durch den aufgrund des Abstands gebildeten Freiraum zwischen den Tunnelabschnitten fällt. Der Freiraum kann durch einander gegenüberliegende, für das von den Leuchtmitteln ausgesandte Licht transparente Scheiben der Tunnelabschnitte begrenzt sein. Die transparenten Scheiben können parallel zueinander angeordnet sein. Sie schützen das Innere der Tunnelabschnitte vor Verunreinigungen, zum Beispiel Staub, ohne die Qualität der optischen Detektion zu beeinträchtigen. Außerdem können sie die Führung des fallenden Schüttgutstroms unterstützen.

Zum Erreichen einer besonders guten Ausleuchtung des Schüttguts und damit einer besonders hohen Detektionswahrscheinlichkeit von Verunreinigungen können beide einander gegenüberliegende Tunnelabschnitte Leuchtmittel zum indirekten Beleuchten des Schüttgutstroms aufweisen. Es ist aber grundsätzlich auch möglich, einen der einander gegenüberliegenden Tunnelabschnitte, insbesondere den dem optischen Detektor abgewandten Hintergrundbeleuchtungstunnelabschnitt passiv zu betreiben, also ohne eigene Leuchtmittel. Es erfolgt dann eine indirekte Beleuchtung des Schüttguts durch diesen Tunnelabschnitt aufgrund der Leuchtmittel des gegenüberliegenden Tunnelabschnitts, insbesondere des dem optischen Detektor zugewandten Auflichtbeleuchtungstunnelabschnitts. In manchen Fällen können auf diese Weise die Homogenität der Ausleuchtung des Schüttguts und damit die Detektierbarkeit von Verunreinigungen verbessert werden.

Die Leuchtmittel zum indirekten Beleuchten des Schüttgutstroms können so angeordnet sein, dass sie eine die von den Leuchtmitteln ausgesandte optische Strahlung diffus reflektierende Innenseite des mindestens einen Tunnelabschnitts beleuchten. Die diffus reflektierende Fläche kann zum Beispiel weiß und matt sein. Die diffus reflektierende Innenfläche kann auf Teilabschnitten mit unterschiedlich stark und diffus reflektierendem Material beschichtet sein. Gegebenenfalls kann auf diese Weise die Ausleuchtung des Schüttgutstroms und damit die Detektion von Verunreinigungen weiter verbessert werden. Es können auch noch zusätzliche Beleuchtungen vorgesehen sein.

Dabei können insbesondere natürlich beide Tunnelabschnitte mit einer solchen von den Leuchtmitteln beleuchteten, diffus reflektierenden Fläche versehen sein. Es kann weiter vorgesehen sein, dass die Tunnelabschnitte (und die weiteren Bestandteile der Vorrichtung) derart ausgestaltet sind, dass der Schüttgutstrom zumindest im Sichtfeld des mindestens einen optischen Detektors in einer senkrecht zur Längsachse zumindest eines der Tunnelabschnitte liegenden Ebene zu mehr als 65%, vorzugsweise zu mehr als 75%, von der diffus reflektierenden Innenseite des mindestens einen Tunnelabschnitts bzw. der Tunnelabschnitte umgeben ist. Die Längsachsen der Tunnelabschnitte verlaufen erfindungsgemäß senkrecht zur Fallrichtung des Schüttgutstroms. Zumindest wenn der Schüttgutstrom das Sichtfeld des mindestens einen optischen Detektors durchläuft, ist der Schüttgutstrom senkrecht zu den Längsachsen der Tunnelabschnitte gesehen weit überwiegend, insbesondere zu mehr als 65%, von den diffus reflektierenden Innenseiten der Tunnelabschnitte umgeben.

Von dem Schüttgutstrom, beispielsweise einem Pellet, aus gesehen ist bei einer gleichmäßigen Drehung um eine Achse, die parallel zur Längsrichtung des durch die Tunnelabschnitte gebildeten röhrenförmigen Abschnitts verläuft, senkrecht zur Drehachse gesehen mehr als 65% der Zeit die diffus reflektierende Innenseite eines der Tunnelabschnitte sichtbar und weniger als 35% der Zeit schlecht oder gar nicht beleuchtete bzw. reflektierende Bereiche. Bei solchen Bereichen kann es sich insbesondere um den zwischen den Tunnelabschnitten gebildeten Freiraum handeln, durch den der Schüttgutstrom fällt, um Halterungen oder Abdeckungen der Leuchtmittel oder eine Öffnung in einem der Tunnelabschnitte, durch die der mindestens eine optische Detektor den Schüttgutstrom detektiert. Durch die vorgenannte Ausgestaltung wird die indirekte Beleuchtung des Schüttgutstroms weiter vergleichmäßigt, wodurch die Detektion von Verunreinigungen insbesondere bei transparentem Schüttgut weiter verbessert wird. Natürlich kann der Schüttgutstrom auch jeweils in einem Bereich vor und nach dem Sichtfeld des mindestens einen optischen Detektors in einer senkrecht zur Längsachse zumindest eines der Tunnelabschnitte liegenden Ebene zu mehr als 65%, vorzugsweise zu mehr als 75%, von der diffus reflektierenden Innenseite des mindestens einen Tunnelabschnitts umgeben sein.

Diese und weitere nachfolgend noch beschriebenen Ausgestaltungen dienen im Wesentlichen dem Ziel, Störungen der idealen Beleuchtung, die durch seitliche Öffnungen der Tunnelabschnitte, Öffnungen in den Außenwänden der Tunnelabschnitte für die optischen Detektoren und/oder den Schüttguteintritt und Schüttgutaustritt verursacht werden, zu kompensieren.

Der mindestens eine optische Detektor kann zur Minimierung der Störung der gleichmäßigen Ausleuchtung durch mindestens eine schlitzförmige Öffnung in der Außenseite des mindestens einen Tunnelabschnitts hindurch auf den Schüttgutstrom gerichtet sein. Die schlitzförmige Öffnung ist dabei möglichst klein ausgebildet, um Beeinträchtigungen des Detektionsergebnisses zu minimieren.

Wie bereits erläutert, können die Tunnelabschnitte seitlich jeweils über den Schüttgutstrom hinausragen. Die Tunnelabschnitte können auf beiden Seiten des Schüttgutstroms insbesondere jeweils einen Überstand über den Schüttgutstrom von mindestens einem Durchmesser des von den Tunnelabschnitten gebildeten röhrenförmigen Abschnitts besitzen. Die Länge des von den Tunnelabschnitten gebildeten röhrenförmigen Abschnitts (Doppeltunnelabschnitts) ist also größer als die Breite des Schüttgutstroms. Dadurch wird die Ausleuchtung des Schüttgutstroms an die ideale Beleuchtung einer Ulbricht-Kugel weiter angenähert. Insbesondere werden Störungen durch eine an den Tunnelrändern abfallende Beleuchtungsintensität vermieden bzw. reduziert. Theoretisch sollten die Tunnelabschnitte unendlich weit zu beiden Seiten über den Schüttgutstrom überstehen, um eine optimale Beleuchtung auch von der Seite sicherzustellen. Praktisch kann durch einen Überstand auf jeder Seite von beispielsweise ein bis drei Durchmesser des röhrenförmigen Abschnitts eine zufriedenstellende Ausleuchtung erreicht werden. Alternativ oder zusätzlich können die einander gegenüberliegende Tunnelabschnitte seitlich jeweils durch einen vorzugsweise ebenfalls mit Leuchtmitteln zur indirekten Beleuchtung des Schüttgutsstroms versehenen Dom abgeschlossen werden.

Nach einer weiteren Ausgestaltung können mindestens zwei optische Detektoren vorgesehen sein, die durch einen der Tunnelabschnitte hindurch auf den Schüttgutstrom gerichtet sind. Es blicken bei dieser Ausgestaltung also mindestens zwei optische Detektoren von derselben Seite und durch denselben Tunnelabschnitt auf das Schüttgut. Dadurch kann eine weitere Verbesserung der Detektion von Verunreinigungen erreicht werden, insbesondere bei transparentem Schüttgut. Die optischen Detektoren können dabei unter einem Winkel von mindestens 30°, vorzugsweise mindestens 45°, weiter vorzugsweise mindestens 60°, zueinander auf den Schüttgutstrom gerichtet sein. Die optischen Achsen der optischen Detektoren liegen dann also um einen Winkel von mindestens 30° zueinander. Dadurch werden Störungen bei der Auswertung vermieden. Auch transparentes Schüttgut beugt Licht. Dadurch kann ein optischer Detektor Verunreinigungen im Bereich des Randes beispielsweise eines Pellets nicht zuverlässig erkennen. Hierfür kann ein zweiter, unter einem anderen Winkel auf das Schüttgut gerichteter optischer Detektor hilfreich sein.

Es können weiterhin mindestens zwei optische Detektoren vorgesehen sein, die durch gegenüberliegende Tunnelabschnitte hindurch auf den Schüttgutstrom gerichtet sind. Die Erfassungsbereiche der mindestens zwei Detektoren können sich im Zentrum des durch die Tunnelabschnitte gebildeten röhrenförmigen Abschnitts treffen. Es blicken bei dieser Ausgestaltung also mindestens zwei optische Detektoren von gegenüberliegenden Seiten und durch einander gegenüberliegende Tunnelabschnitte auf den Schüttgutstrom. Diese Ausgestaltung ist insbesondere bei nicht transparentem Schüttgut vorteilhaft, da der Schüttgutstrom von beiden Seiten sicher erfasst wird. Bei transparentem Schüttgut ist es dagegen oftmals ausreichend, das Schüttgut nur von einer Seite zu detektieren. Um wiederum Störungen zu vermeiden, können die durch die gegenüberliegenden Tunnelabschnitte hindurch auf den Schüttgutstrom gerichteten optischen Detektoren unter einem Winkel zueinander auf den Schüttgutstrom gerichtet sein.

Allgemein kann bei Vorhandensein mehrerer optischer Detektoren jeder der Detektoren durch einen Schlitz in dem jeweiligen Tunnelabschnitt hindurch auf den Schüttgutstrom gerichtet sein. Bei sämtlichen optischen Detektoren kann es sich um Kameras handeln, wie eingangs erläutert. Alle optischen Detektoren sind dann mit der Auswerteeinrichtung verbunden und die Auswerteeinrichtung stellt anhand der Messdaten sämtlicher optischer Detektoren Verunreinigungen des untersuchten Schüttguts fest. Grundsätzlich ist es sinnvoll, eine gemeinsame Auswerteeinrichtung für alle Detektoren vorzusehen. Zwingend ist dies jedoch nicht. Es ist beispielsweise auch möglich, dass zunächst jedem Detektor eine eigene Auswerteeinrichtung zugeordnet ist, die ihre Messdaten bzw. (Vor-)Auswertungen einer gemeinsamen Auswerteeinrichtung zuführen. Auch möglich ist es, dass die erfindungsgemäße Auswerteeinrichtung mehrere unabhängig voneinander operierende Auswerteeinheiten umfasst. Es sind im Wesentlichen beliebige Kombinationen der oben erläuterten Ausgestaltungen mit mehreren optischen Detektoren denkbar. Beispielsweise könnten auf einer Seite der Doppeltunnelanordnung zwei optische Detektoren und auf der gegenüberliegenden Seite ein optischer Detektor angeordnet sein. Auch denkbar wäre, auf beiden Seiten der Doppeltunnelanordnung jeweils zwei optische Detektoren vorzusehen. Bei sehr langen Tunnelabschnitten wäre es auch denkbar, auf einer oder beiden Seiten der Doppeltunnelanordnung mehrere optische Detektoren nebeneinander anzuordnen.

Nach einer weiteren Ausgestaltung kann vorgesehen sein, dass in Fallrichtung des Schüttgutstroms hintereinander mehrere Paare voneinander röhrenförmig gegenüberliegenden Tunnelabschnitten vorgesehen sind, die jeweils so angeordnet sind, dass der Schüttgutstrom zwischen den Tunnelabschnitten hindurch fällt, wobei jeweils mindestens einer der Tunnelabschnitte Leuchtmittel zum indirekten Beleuchten des Schüttgutstroms aufweist, wobei jeweils mindestens ein optischer Detektor vorgesehen ist, der durch jeweils mindestens einen der Tunnelabschnitte hindurch auf den Schüttgutstrom gerichtet ist, und wobei die Auswerteeinrichtung anhand der Messdaten sämtlicher optischer Detektoren Verunreinigungen des untersuchten Schüttguts feststellt. Die Leuchtmittel der in Fallrichtung des Schüttgutstroms hintereinander angeordneten Tunnelabschnitte können weiterhin optische Strahlung in unterschiedlichen Wellenlängenbereichen aussenden.

Bei den vorgenannten Ausgestaltungen sind in Fallrichtung des Schüttgutstroms hintereinander mehrere Paare von Tunnelabschnitten angeordnet, die jeweils einen röhrenförmigen Abschnitt bilden. Die den nacheinander angeordneten röhrenförmigen Abschnitten zugeordneten optischen Detektoren, zum Beispiel Kameras, sind dann entsprechend empfindlich für den von den Leuchtmitteln des jeweiligen Tunnelabschnitts bzw. röhrenförmigen Abschnitts ausgesandten Wellenlängenbereich. Die Leuchtmittel bzw. die optischen Detektoren können auf unterschiedliche Wellenlängenbereiche oder beispielsweise bestimmte Spektrallinien im elektromagnetischen Spektrum ausgerichtet sein. Durch Verwendung mehrerer Doppeltunnelanordnungen können unterschiedliche Detektoren bzw. Leuchtmittel in einem System kombiniert werden. So können beispielsweise in einem Doppeltunnel hochauflösende Schwarz/Weiß-Bilder aufgenommen werden, in einem weiteren Tunnel Farbinformationen erfasst werden und in einem weiteren Tunnel UV- oder IR-Eigenschaften. Mehrere Detektoren gleichen Typs können den Schüttgutstrom gleichzeitig aus verschiedenen Richtungen betrachten. In dieser Hinsicht können sämtliche oben erläuterten Ausgestaltungen bei sämtlichen Doppeltunnelanordnungen zum Einsatz kommen.

Zwar wäre es grundsätzlich auch möglich, in nur einem röhrenförmigen Abschnitt Leuchtmittel unterschiedlicher Wellenlänge miteinander zu kombinieren, deren Strahlung dann von für die jeweiligen Wellenlängenbereiche empfindlichen optischen Detektoren aufgenommen wird. Es wäre dann aber in einem röhrenförmigen Abschnitt eine Mehrzahl von Leuchtmitteln und Detektoren und damit störenden Öffnungen (Schlitzen) erforderlich. Um dies zu vermeiden, kann es sinnvoll sein, die Erfassung unterschiedlicher optischer Eigenschaften auf mehrere in Fallrichtung des Schüttgutstroms hintereinander angeordnete Doppeltunnelanordnungen zu verteilen.

Die Erfindung löst die Aufgabe außerdem durch ein Verfahren zum Betreiben einer erfindungsgemäßen Vorrichtung, wobei die Leuchtmittel unterschiedlicher Tunnelabschnitte mit unterschiedlicher Intensität und/oder Wellenlänge betrieben werden und/oder wobei unterschiedliche Leuchtmittel mindestens eines Tunnelabschnitts mit unterschiedlicher Intensität betrieben werden.

Insbesondere können Leuchtmittel der einander gegenüberliegenden Tunnelabschnitte mit unterschiedlicher Intensität betrieben werden. Auch können zum Beispiel Leuchtmittel an den Rändern der Tunnelabschnitte mit stärkerer Intensität betrieben werden als Leuchtmittel näher zum Zentrum der Tunnelabschnitte, um ein Abfallen der Beleuchtung an den Rändern und eine damit verbundene Störung des Detektionsergebnisses zu vermeiden. Auch eine beispielsweise stroboskopische Beleuchtung des Schüttgutstroms ist denkbar, um etwaige Unschärfen auszugleichen. Mit dem erfindungsgemäßen Verfahren kann eine individuelle Anpassung an das jeweils zu untersuchende Schüttgut erfolgen.

Ausführungsbeispiele der Erfindung werden nachfolgend anhand von Figuren näher erläutert. Es zeigen schematisch:
- Fig. 1: eine erfindungsgemäße Vorrichtung nach einem ersten Ausführungsbeispiel in einer seitlichen Schnittansicht,
- Fig. 2: die Vorrichtung aus Fig. 1 in einer Draufsicht,
- Fig. 3: eine erfindungsgemäße Vorrichtung nach einem zweiten Ausführungsbeispiel in einer seitlichen Schnittansicht,
- Fig. 4: eine erfindungsgemäße Vorrichtung nach einem dritten Ausführungsbeispiel in einer seitlichen Schnittansicht, und
- Fig. 5: eine erfindungsgemäße Vorrichtung nach einem vierten Ausführungsbeispiel in einer seitlichen Schnittansicht.

Soweit nichts anderes angegeben ist, bezeichnen in den Figuren gleiche Bezugszeichen gleiche Gegenstände.

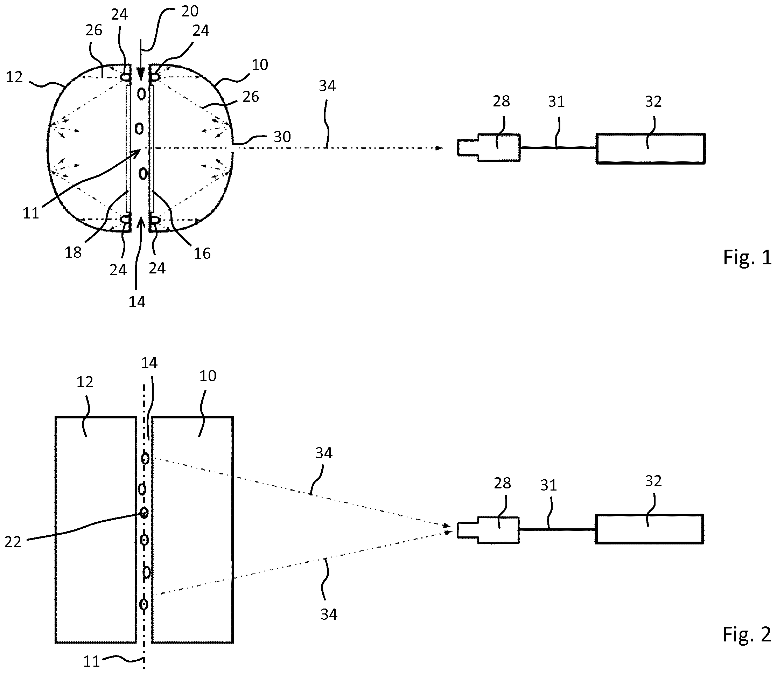

In Fig. 1 sind bei den Bezugszeichen 10 und 12 zwei einander röhrenförmig gegenüberliegende Tunnelabschnitte gezeigt. Die Tunnelabschnitte 10, 12 sind vorliegend identisch zueinander ausgebildet und spiegelsymmetrisch zueinander angeordnet. Sie bilden zusammen eine etwa zylindrische Röhre. Die Tunnelabschnitte 10, 12 sind voneinander beabstandet, so dass zwischen ihnen ein Freiraum 14 gebildet ist. Begrenzt wird der Freiraum 14 durch zwei einander gegenüberliegende Scheiben 16, 18 der Tunnelabschnitte 10, 12. Beispielsweise von einer Vibrationsfördereinrichtung kommend wird der Vorrichtung Schüttgut in einem im Wesentlichen planen Schüttgutstrom durch einen Schüttguteintritt zugeführt, wie in Fig. 1 durch den Pfeil 20 veranschaulicht. Der Schüttguteintritt ist im dargestellten Beispiel durch den Eintritt in den Freiraum 14 gebildet. Bestandteile des Schüttgutstroms sind in den Figuren bei dem Bezugszeichen 22 gezeigt. Bei dem Schüttgut kann es sich zum Beispiel um Pellets, insbesondere Kunststoffpellets handeln. Die Pellets können transparent sein. Sie können eine glatte, spiegelnd reflektierende Oberfläche besitzen. Das Schüttgut des Schüttgutstroms 22 fällt im Betrieb schwerkraftbedingt durch den Freiraum 14 zwischen den Tunnelabschnitten 10, 12 hindurch, seitlich lediglich geführt durch die Scheiben 16, 18. Wie insbesondere aus den Figuren 1 und 2 hervorgeht, liegt die Fallrichtung des Schüttgutstroms 22 senkrecht zur Längsachse des von den Tunnelabschnitten gebildeten röhrenförmigen Abschnitts, die in Fig. 1 in die Zeichenebene hinein verläuft.

In dem gezeigten Beispiel umfassen beide Tunnelabschnitte 10, 12 Leuchtmittel 24 zum indirekten Beleuchten des Schüttgutstroms. Bei den Leuchtmitteln 24 kann es sich zum Beispiel um Leuchtdioden handeln. Wie in Fig. 1 durch die Pfeile 26 veranschaulicht, beleuchten die Leuchtmittel 24 die gewölbten Innenflächen der Tunnelabschnitte 10, 12. Von diesen Innenflächen wird die optische Strahlung diffus reflektiert und führt zu einer indirekten gleichmäßigen und allseitigen Beleuchtung des Schüttgutstroms 22. Zu diesem Zweck ist die insbesondere in der Draufsicht der Fig. 2 zu erkennende seitliche Ausdehnung der Tunnelabschnitte 10, 12 größer als die Breite des Schüttgutstroms 22, so dass die Tunnelabschnitte 10, 12 jeweils einen seitlichen Überstand über den Schüttgutstrom 22 hinaus besitzen.

Bei dem Bezugszeichen 28 ist ein optischer Detektor, beispielsweise eine Kamera, gezeigt, der durch einen Schlitz 30 in der Außenwand des dem Detektor 28 zugewandten Tunnelabschnitts 10 hindurch auf den Schüttgutstrom 22 gerichtet ist. Der optische Detektor 28 erfasst von dem Schüttgutstrom 22 reflektierte Strahlung. Die Messdaten des optischen Detektors 28 werden über eine Leitung 31 einer Auswerteeinrichtung 32 zugeführt, die auf dieser Grundlage in grundsätzlich bekannter Weise auf unzulässige Verunreinigungen des Schüttguts schließt. Der Schlitz 30 ist in Längsrichtung der Tunnelabschnitte 10, 12 ausgedehnt, so dass der optische Detektor 28 einen in Längsrichtung der Tunnelabschnitte 10, 12 ausgedehnten Messbereich besitzt, wie in Fig. 2 durch die Pfeile 34 veranschaulicht. Senkrecht zu dieser Längsrichtung ist der Messbereich dagegen im Wesentlichen nicht ausgedehnt, wie in Fig. 1 ebenfalls durch den Pfeil 34 veranschaulicht.

In dem gezeigten Ausführungsbeispiel ist der Schüttgutstrom 22 zumindest im Sichtfeld des mindestens einen optischen Detektors 28, in Fig. 1 also insbesondere entlang der Längsachse 11 der durch die Tunnelabschnitte 10, 12 gebildeten Röhre, in einer senkrecht zur Längsachse 11 liegenden Ebene, in Fig. 1 also der Zeichenebene, zu mehr als 65%, vorzugsweise zu mehr als 75%, von den diffus reflektierenden Innenflächen der Tunnelabschnitte 10, 12 umgeben.

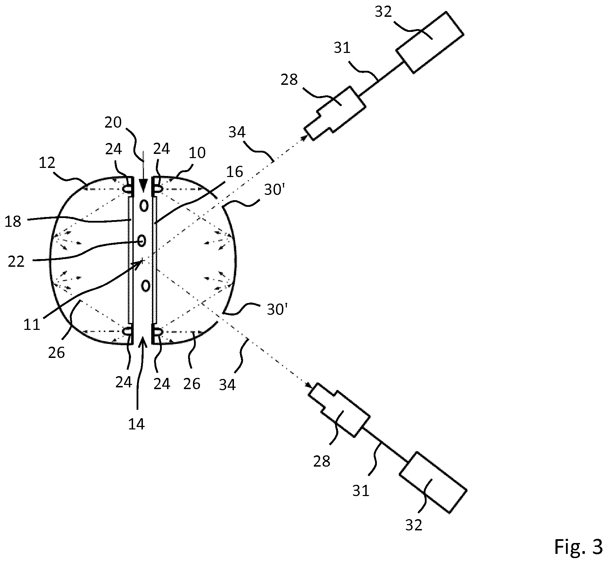

In Fig. 3 ist ein weiteres Ausführungsbeispiel einer erfindungsgemäßen Vorrichtung gezeigt. Dieses Ausführungsbeispiel entspricht weitgehend dem Ausführungsbeispiel aus den Figuren 1 und 2. Im Unterschied zu dem Ausführungsbeispiel aus den Figuren 1 und 2 sind bei dem Ausführungsbeispiel der Fig. 3 zwei optische Detektoren 28 vorgesehen, die jeweils durch einen Schlitz 30' in der Außenwand des Tunnelabschnitts 10 hindurch den Schüttgutstrom 22 erfassen. Jeder der optischen Detektoren 28 ist wiederum über eine Leitung 31 mit einer Auswerteeinrichtung 32 verbunden. Die Auswerteeinrichtungen 32 in dem Ausführungsbeispiel der Fig. 3 können mit einer nicht näher dargestellten gemeinsamen Auswerteeinrichtung verbunden sein. Natürlich könnte anstelle der zwei Auswerteeinrichtungen 32 auch nur eine Auswerteeinrichtung vorgesehen sein, mit der beide optischen Detektoren 28 direkt verbunden sind. Die beiden optischen Detektoren 28 im Ausführungsbeispiel der Fig. 3 sind unter einem Winkel zueinander auf den Schüttgutstrom 22 gerichtet. Im Übrigen ist die Ausgestaltung und sind die Erfassungsbereiche 34 der optischen Detektoren 28 aus Fig. 3 ausgebildet wie bei dem optischen Detektor 28 des Ausführungsbeispiels der Figuren 1 und 2. Durch die Anordnung zweier optischer Detektoren 28 unter einem Winkel, wie in Fig. 3 gezeigt, kann die Detektionswahrscheinlichkeit von Verunreinigung des Schüttgutstroms 22 weiter erhöht werden.

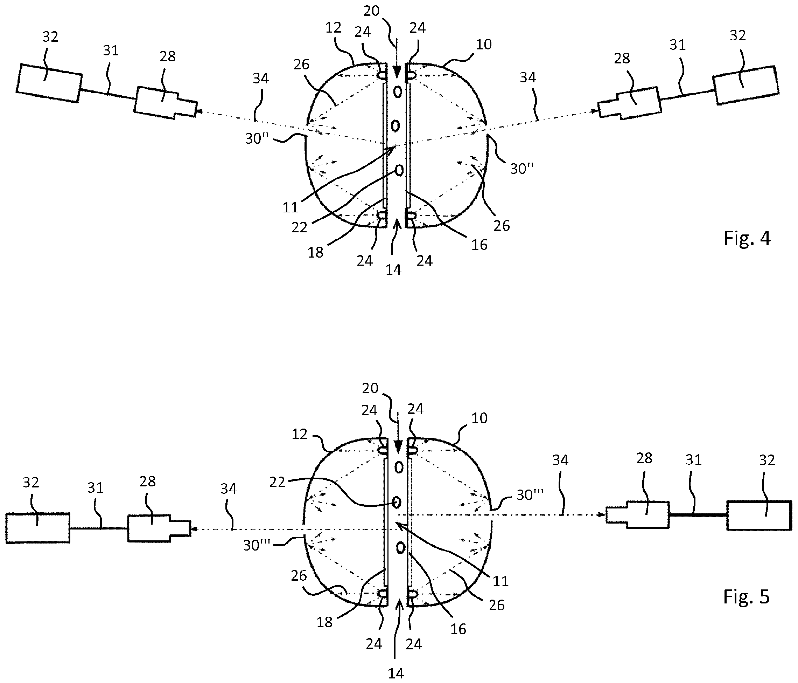

Auch das in Fig. 4 gezeigte Ausführungsbeispiel entspricht weitgehend dem in den Figuren 1 und 2 gezeigten Ausführungsbeispiel. Im Unterschied zu dem Ausführungsbeispiel der Figuren 1 und 2 sind bei dem Ausführungsbeispiel der Fig. 4 zwei optische Detektoren 28 vorgesehen, die jeweils durch einen Schlitz 30" in den Außenwänden der einander gegenüberliegenden Tunnelabschnitte 10, 12 hindurch, also von gegenüberliegenden Seiten, auf den Schüttgutstrom 22 gerichtet sind. Die Erfassungsbereiche 34 der optischen Detektoren 28 treffen sich im Zentrum des durch die Tunnelabschnitte 10, 12 gebildeten röhrenförmigen Abschnitts. Außerdem sind die optischen Detektoren 28 in Fig. 4 unter einem Winkel zueinander angeordnet, um gegenseitige Störungen zu vermeiden. Im Übrigen gilt hinsichtlich der Ausgestaltung der optischen Detektoren 28 sowie der Auswerteinrichtungen 32 das zu Fig. 3 Gesagte in entsprechender Weise. Die in Fig. 4 gezeigte Ausgestaltung, bei der der Schüttgutstrom 22 von gegenüberliegenden Seiten erfasst wird, eignet sich insbesondere für nicht-transparentes Schüttgut, während sich die Ausgestaltungen der Figuren 1 bis 3 insbesondere für transparentes Schüttgut eignen.

In Fig. 5 ist eine weitere Ausgestaltung gezeigt, die der Ausgestaltung aus Fig. 4 grundsätzlich entspricht. Im Unterschied zu der Ausgestaltung der Fig. 4 sind die beiden auf gegenüberliegenden Seiten angeordneten optischen Detektoren 28 bei dem Ausführungsbeispiel der Fig. 5 allerdings nicht unter einem Winkel zueinander angeordnet, sondern auf unterschiedlicher Höhe, wobei die optischen Detektoren 28 den Schüttgutstrom 22 jeweils durch einen Schlitz 30"' erfassen. Die beiden Schlitze 30"' sind höhenversetzt zueinander, um gegenseitige Störungen zu vermeiden.

Die in den Figuren 1 bis 5 gezeigten Ausgestaltungen können abhängig von dem zu detektierenden Schüttgut auch miteinander kombiniert werden. Grundsätzlich kann durch Wahl der geeigneten Anordnung und Ausrichtung der optischen Detektoren 28 das Messergebnis für die Detektion optimiert werden.

### Bezugszeichenliste

- 10: Tunnelabschnitt
- 11: Längsachse
- 12: Tunnelabschnitt
- 14: Freiraum
- 16: Scheibe
- 18: Scheibe
- 20: Pfeil
- 22: Schüttgutstrom
- 24: Leuchtmittel
- 26: Pfeile
- 28: Optischer Detektor
- 30: Schlitz
- 30': Schlitz
- 30": Schlitz
- 30"': Schlitz
- 31: Leitung
- 32: Auswerteeinrichtung
- 34: Pfeile

## Patentansprüche

1. Vorrichtung zum Untersuchen von Schüttgut, insbesondere von Pellets, auf Verunreinigungen, umfassend einen Schüttguteintritt, durch den Schüttgut der Vorrichtung in einem im Wesentlichen planen Schüttgutstrom (22) zugeführt wird, wobei die Vorrichtung zwei einander röhrenförmig gegenüberliegende Tunnelabschnitte (10, 12) umfasst, die so angeordnet sind, dass der Schüttgutstrom (22) zwischen den Tunnelabschnitten (10, 12) hindurch fällt, wobei die Längsachsen der Tunnelabschnitte (10, 12) senkrecht zur Fallrichtung des Schüttgutstroms verlaufen und wobei mindestens einer der Tunnelabschnitte (10, 12) Leuchtmittel (24) zum indirekten Beleuchten des Schüttgutstroms (22) aufweist, wobei die indirekte Beleuchtung derart ist, dass keine optische Strahlung direkt von den Leuchtmitteln zu dem Schüttgutstrom (22) gelangt, und dass keine optische Strahlung direkt von den Leuchtmitteln zu dem optischen Detektor gelangt, wobei mindestens ein optischer Detektor (28) vorgesehen ist, der durch mindestens einen der Tunnelabschnitte (10, 12) hindurch auf den Schüttgutstrom (22) gerichtet ist, und wobei eine Auswerteeinrichtung (32) vorgesehen ist, die anhand der Messdaten des mindestens einen optischen Detektors (28) Verunreinigungen des untersuchten Schüttguts feststellt.

2. Vorrichtung nach Anspruch 1, **dadurch gekennzeichnet, dass** die Tunnelabschnitte (10, 12) voneinander beabstandet sind, wobei der Schüttgutstrom (22) durch den aufgrund des Abstands gebildeten Freiraum (14) zwischen den Tunnelabschnitten (10, 12) fällt.

3. Vorrichtung nach Anspruch 2, **dadurch gekennzeichnet, dass** der Freiraum (14) durch einander gegenüberliegende, für das von den Leuchtmitteln (24) ausgesandte Licht transparente Scheiben (16, 18) der Tunnelabschnitte (10, 12) begrenzt ist.

4. Vorrichtung nach einem der vorhergehenden Ansprüche, **dadurch gekennzeichnet, dass** beide Tunnelabschnitte (10, 12) Leuchtmittel (24) zum indirekten Beleuchten des Schüttgutstroms (22) aufweisen.

5. Vorrichtung nach einem der vorhergehenden Ansprüche, **dadurch gekennzeichnet, dass** die Leuchtmittel (24) zum indirekten Beleuchten des Schüttgutstroms (22) so angeordnet sind, dass sie eine die von den Leuchtmitteln (24) ausgesandte optische Strahlung diffus reflektierende Innenseite des mindestens einen Tunnelabschnitts (10, 12) beleuchten.

6. Vorrichtung nach Anspruch 5, **dadurch gekennzeichnet, dass** die Tunnelabschnitte (10, 12) derart ausgestaltet sind, dass der Schüttgutstrom (22) zumindest im Sichtfeld des mindestens einen optischen Detektors (28) in einer senkrecht zur Längsachse zumindest eines der Tunnelabschnitte (10, 12) liegenden Ebene zu mehr als 65% von der diffus reflektierenden Innenseite des mindestens einen Tunnelabschnitts (10, 12) umgeben ist.

7. Vorrichtung nach einem der vorhergehenden Ansprüche, **dadurch gekennzeichnet, dass** der mindestens eine optische Detektor (28) durch mindestens eine schlitzförmige Öffnung in der Außenseite des mindestens einen Tunnelabschnitts (10, 12) hindurch auf den Schüttgutstrom (22) gerichtet ist.

8. Vorrichtung nach einem der vorhergehenden Ansprüche, **dadurch gekennzeichnet, dass** der Schüttguteintritt derart ausgebildet ist, dass die Tunnelabschnitte (10, 12) auf beiden Seiten des Schüttgutstroms (22) jeweils einen Überstand über den Schüttgutstrom (22) von mindestens einem Durchmesser des von den Tunnelabschnitten (10, 12) gebildeten röhrenförmigen Abschnitts aufweisen.

9. Vorrichtung nach einem der vorhergehenden Ansprüche, **dadurch gekennzeichnet, dass** mindestens zwei optische Detektoren (28) vorgesehen sind, die durch einen der Tunnelabschnitte (10, 12) hindurch auf den Schüttgutstrom (22) gerichtet sind.

10. Vorrichtung nach Anspruch 9, **dadurch gekennzeichnet, dass** die optischen Detektoren (28) unter einem Winkel von mindestens 30°, vorzugsweise mindestens 45°, zueinander auf den Schüttgutstrom (22) gerichtet sind.

11. Vorrichtung nach einem der vorhergehenden Ansprüche, **dadurch gekennzeichnet, dass** mindestens zwei optische Detektoren (28) vorgesehen sind, die durch gegenüberliegende Tunnelabschnitte (10, 12) hindurch auf den Schüttgutstrom (22) gerichtet sind.

12. Vorrichtung nach Anspruch 11, **dadurch gekennzeichnet, dass** sich die Erfassungsbereiche der mindestens zwei optischen Detektoren (28) im Zentrum des durch die Tunnelabschnitte (10, 12) gebildeten röhrenförmigen Abschnitts treffen.

13. Vorrichtung nach einem der Ansprüche 11 oder 12, **dadurch gekennzeichnet, dass** die durch die gegenüberliegenden Tunnelabschnitte (10, 12) hindurch auf den Schüttgutstrom (22) gerichteten optischen Detektoren (28) unter einem Winkel zueinander auf den Schüttgutstrom (22) gerichtet sind.

14. Vorrichtung nach einem der vorhergehenden Ansprüche, **dadurch gekennzeichnet, dass** in Fallrichtung des Schüttgutstroms (22) hintereinander mehrere Paare voneinander röhrenförmig gegenüberliegenden Tunnelabschnitten (10, 12) vorgesehen sind, die jeweils so angeordnet sind, dass der Schüttgutstrom (22) zwischen den Tunnelabschnitten (10, 12) hindurch fällt, wobei jeweils mindestens einer der Tunnelabschnitte (10, 12) Leuchtmittel (24) zum indirekten Beleuchten des Schüttgutstroms (22) aufweist, wobei jeweils mindestens ein optischer Detektor (28) vorgesehen ist, der durch jeweils mindestens einen der Tunnelabschnitte (10, 12) hindurch auf den Schüttgutstrom (22) gerichtet ist, und wobei die Auswerteeinrichtung (32) anhand der Messdaten sämtlicher optischer Detektoren (28) Verunreinigungen des untersuchten Schüttguts feststellt.

15. Vorrichtung nach Anspruch 14, **dadurch gekennzeichnet, dass** die Leuchtmittel (24) der in Fallrichtung des Schüttgutstroms (22) hintereinander angeordneten Tunnelabschnitte (10, 12) optische Strahlung in unterschiedlichen Wellenlängenbereichen aussenden.

16. Verfahren zum Betreiben einer Vorrichtung nach einem der vorhergehenden Ansprüche, **dadurch gekennzeichnet, dass** die Leuchtmittel (24) unterschiedlicher Tunnelabschnitte (10, 12) mit unterschiedlicher Intensität und/oder Wellenlänge betrieben werden und/oder dass unterschiedliche Leuchtmittel (24) mindestens eines Tunnelabschnitts (10, 12) mit unterschiedlicher Intensität betrieben werden.

## Claims

1. A device for inspecting bulk material, in particular pellets, for contaminants, comprising a bulk material inlet, through which the bulk material is fed to the device in a substantially planar bulk material flow (22), wherein the device comprises two opposing tubular tunnel portions (10, 20), which are arranged such that the bulk material flow (22) falls through between the tunnel portions (10, 12), wherein the longitudinal axes of the tunnel portions (10, 12) extend perpendicularly to the falling direction of the bulk material flow and wherein at least one of the tunnel portions (10, 12) comprises lamps (24) for indirectly illuminating the bulk material flow (22), wherein the indirect illumination is such that no optical radiation arrives directly at the bulk material flow (22) from the lamps, and such that no optical radiation arrives directly at the optical detector from the lamps, wherein at least one optical detector (28) is provided, which is directed through at least one of the tunnel portions (10, 12) at the bulk material flow (22), and wherein an evaluation apparatus (32) is provided, which identifies contaminants in the inspected bulk material based on the measurement data of the at least one optical detector (28).

2. The device according to claim 1, **characterized in that** the tunnel portions (10, 12) are spaced apart from one another, wherein the bulk material flow (22) falls through the free space (14) formed between the tunnel portions (10, 12) on account of said spacing.

3. The device according to claim 2, **characterized in that** the free space (14) is delimited by opposing windows (16, 18) of the tunnel portions (10, 12), which are transparent to the light emitted by the lamps (24).

4. The device according to any one of the preceding claims, **characterized in that** both tunnel portions (10, 12) comprise lamps (24) for indirectly illuminating the bulk material flow (22).

5. The device according to any one of the preceding claims, **characterized in that** the lamps (24) for indirectly illuminating the bulk material flow (22) are arranged such that they illuminate an inner face of the at least one tunnel portion (10, 12) that diffusely reflects the optical radiation emitted by the lamps (24).

6. The device according to claim 5, **characterized in that** the tunnel portions (10, 12) are designed such that the bulk material flow (22) is surrounded by more than 65% by the diffusely reflective inner face of the at least one tunnel portion (10, 12) at least in the field of view of the at least one optical detector (28) in a plane that lies perpendicular to the longitudinal axis of at least one of the tunnel portions (10, 12).

7. The device according to any one of the preceding claims, **characterized in that** the at least one optical detector (28) is directed at the bulk material flow (22) through at least one slot-shaped opening in the outer face of the at least one tunnel portion (10, 12).

8. The device according to any one of the preceding claims, **characterized in that** the bulk material inlet is designed such that the tunnel portions (10, 12) on both sides of the bulk material flow (22) in each case overhang the bulk material flow (22) by at least a diameter of the tubular portion formed by the tunnel portions (10, 12).

9. The device according to any one of the preceding claims, **characterized in that** at least two optical detectors (28) are provided, which are directed at the bulk material flow (22) through one of the tunnel portions (10, 12).

10. The device according to claim 9, **characterized in that** the optical detectors (28) are directed at the bulk material flow (22) at an angle of at least 30°, preferably at least 45° to one another.

11. The device according to any one of the preceding claims, **characterized in that** at least two optical detectors (28) are provided, which are directed at the bulk material flow (22) through opposing tunnel portions (10, 12).

12. The device according to claim 11, **characterized in that** the detection zones of the at least two optical detectors (28) meet in the center of the tubular portion formed by the tunnel portions (10, 12).

13. The device according to any one of claims 11 or 12, **characterized in that** the optical detectors (28) directed at the bulk material flow (22) through the opposing tunnel portions (10, 12) are directed at the bulk material flow (22) at an angle to one another.

14. The device according to any one of the preceding claims, **characterized in that** multiple pairs of tubular opposing tunnel portions (10, 12) in each case arranged such that the bulk material flow (22) falls through between the tunnel portions (10, 12) are provided one behind the other in the falling direction of the bulk material flow (22), wherein in each case at least one of the tunnel portions (10, 12) comprises lamps (24) for indirectly illuminating the bulk material flow (22), wherein in each case at least one optical detector (28) is provided, which is directed at the bulk material flow (22) through in each case at least one of the tunnel portions (10, 12), and wherein the evaluation apparatus (32) identifies contaminants in the investigated bulk material based on the measurement data of all optical detectors (28).

15. The device according to claim 14, **characterized in that** the lamps (24) of the tunnel portions (10, 12) arranged one behind the other in the falling direction of the bulk material flow (22) emit optical radiation in different wavelength ranges.

16. A method for operating a device according to any one of the preceding claims, **characterized in that** the lamps (24) of different tunnel portions (10, 12) are operated at different intensities and/or wavelengths and/or **in that** different lamps (24) of at least one tunnel portion (10, 12) are operated at different intensities.

## Revendications

1. Dispositif d'inspection de matériau en vrac, en particulier de granulés, quant à des impuretés, comportant une entrée de matériau en vrac, à travers laquelle du matériau en vrac est introduit dans le dispositif dans un flux de matériau en vrac (22) essentiellement plat, le dispositif comportant deux sections de tunnel (10, 12) opposées l'une à l'autre de façon tubulaire, lesquelles sont disposées de telle façon que le flux de matériau en vrac (22) chute entre les sections de tunnel (10, 12), dans lequel les axes longitudinaux des sections de tunnel (10, 12) s'étendent perpendiculairement à la direction de chute du flux de matériau en vrac et dans lequel l'une au moins des sections de tunnel (10, 12) présente des moyens lumineux (24) pour l'éclairage indirect du flux de matériau en vrac (22), l'éclairage indirect étant tel qu'aucun rayonnement optique n'arrive directement des moyens lumineux au flux de matériau en vrac (22), et qu'aucun rayonnement optique n'arrive directement des moyens lumineux au détecteur optique, dans lequel il est prévu au moins un détecteur optique (28), lequel est dirigé vers le flux de matériau en vrac (22) à travers l'une au moins des sections de tunnel (10, 12), et dans lequel il est prévu un dispositif d'évaluation (32) constatant des impuretés dans le matériau en vrac inspecté à l'aide de données de mesure de l'au moins un détecteur optique (28).

2. Dispositif selon la revendication 1, **caractérisé en ce que** les sections de tunnel (10, 12) sont espacées l'une de l'autre, dans lequel le flux de matériau en vrac (22) chute entre les sections de tunnel (10, 12) à travers l'espace libre (14) formé du fait de l'espacement.

3. Dispositif selon la revendication 2, **caractérisé en ce que** l'espace libre (14) est délimité par des disques (16, 18) des sections de tunnel (10, 12), lesquels sont opposés l'un à l'autre et transparents à la lumière émise par les moyens lumineux (24).

4. Dispositif selon l'une des revendications précédentes, **caractérisé en ce que** les deux sections de tunnel (10, 12) présentent des moyens lumineux (24) pour l'éclairage indirect du flux de matériau en vrac (22).

5. Dispositif selon l'une des revendications précédentes, **caractérisé en ce que** les moyens lumineux (24) pour l'éclairage indirect du flux de matériau en vrac (22) sont disposés de telle façon qu'ils éclairent un côté intérieur de l'au moins une section de tunnel (10, 12) réfléchissant de manière diffuse le rayonnement optique émis par les moyens lumineux (24).

6. Dispositif selon la revendication 5, **caractérisé en ce que** les sections de tunnel (10, 12) sont conçues de telle façon que le flux de matériau en vrac (22) est entouré à plus de 65% par le côté intérieur à réflexion diffuse de l'au moins une section de tunnel (10, 12) au moins dans le champ visuel de l'au moins un détecteur optique (28) dans un plan s'étendant perpendiculairement à l'axe longitudinal d'au moins une section de tunnel (10, 12).

7. Dispositif selon l'une des revendications précédentes, **caractérisé en ce que** l'au moins un détecteur optique (28) est dirigé vers le flux de matériau en vrac (22) à travers au moins une ouverture en forme de fente dans le côté extérieur de l'au moins une section de tunnel (10, 12).

8. Dispositif selon l'une des revendications précédentes, **caractérisé en ce que** l'entrée de matériau en vrac est conçue de telle façon que sur les deux côtés du flux de matériau en vrac (22), les sections de tunnel (10, 12) présentent respectivement une saillie au-delà du flux de matériau en vrac (22) d'au moins un diamètre de la section tubulaire formée par les sections de tunnel (10, 12).

9. Dispositif selon l'une des revendications précédentes, **caractérisé en ce qu'**il est prévu au moins deux détecteurs optiques (28), lesquels sont dirigés vers le flux de matériau en vrac (22) à travers l'une des sections de tunnel (10, 12) .

10. Dispositif selon la revendication 9, **caractérisé en ce que** les détecteurs optiques (28) sont dirigés vers le flux de matériau en vrac (22) en formant un angle d'au moins 30°, de préférence d'au moins 45°, entre eux.

11. Dispositif selon l'une des revendications précédentes, **caractérisé en ce qu'**il est prévu au moins deux détecteurs optiques (28), lesquels sont dirigés vers le flux de matériau en vrac (22) à travers des sections de tunnel (10, 12) opposées.

12. Dispositif selon la revendication 11, **caractérisé en ce que** les régions de détection des au moins deux détecteurs optiques (28) se rencontrent au centre de la section tubulaire formée par les sections de tunnel (10, 12).

13. Dispositif selon l'une des revendications 11 ou 12, **caractérisé en ce que** les détecteurs optiques (28) dirigés vers le flux de matériau en vrac (22) à travers les sections de tunnel (10, 12) opposées sont dirigés vers le flux de matériau en vrac (22) en formant un angle entre eux.

14. Dispositif selon l'une des revendications précédentes, **caractérisé en ce que** dans la direction de chute du flux de matériau en vrac (22), il est prévu plusieurs paires consécutives de sections de tunnel (10, 12) opposées les unes aux autres de manière tubulaire, lesquelles sont respectivement disposées de telle façon que le flux de matériau en vrac (22) chute entre les sections de tunnel (10, 12), dans lequel l'une au moins des sections de tunnel (10, 12) présente respectivement des moyens lumineux (24) pour l'éclairage indirect du flux de matériau en vrac (22), dans lequel il est respectivement prévu au moins un détecteur optique (28), lequel est dirigé vers le flux de matériau en vrac (22) respectivement à travers l'une au moins des sections de tunnel (10, 12), et dans lequel le dispositif d'évaluation (32) constate des impuretés dans le matériau en vrac inspecté à l'aide des données de mesure de tous les détecteurs optiques (28).

15. Dispositif selon la revendication 14, **caractérisé en ce que** les moyens lumineux (24) des sections de tunnel (10, 12) disposées les unes à la suite des autres dans la direction de chute du flux de matériau en vrac (22) émettent un rayonnement optique dans différentes plages de longueur d'onde.

16. Procédé de fonctionnement d'un dispositif selon l'une des revendications précédentes, **caractérisé en ce que** les moyens lumineux (24) de différentes sections de tunnel (10, 12) fonctionnent avec une intensité et/ou une longueur d'onde différente et/ou **en ce que** différents moyens lumineux (24) d'au moins une section de tunnel (10, 12) fonctionnent avec une intensité différente.
